Europäisches Patentamt

**European Patent Office**

Office européen des brevets

(19)

(11) Publication number: **0 097 390**
A1

(12) EUROPEAN PATENT APPLICATION

(21) Application number: 83200809.8

(22) Date of filing: 03.06.83

(51) Int. Cl.³: **G 01 N 27/30**

(30) Priority: 08.06.82 NL 8202308
02.05.83 NL 8301538

(43) Date of publication of application:
04.01.84 Bulletin 84/1

(84) Designated Contracting States:
AT BE CH DE FR GB IT LI LU NL SE

(71) Applicant: NEDERLANDSE CENTRALE ORGANISATIE
VOOR TOEGEPAST-NATUURWETENSCHAPPELIJK
ONDERZOEK
Juliana van Stolberglaan 148
NL-2595 CL The Hague(NL)

(72) Inventor: Schoonman, Johannes
Koperslagershoek 10
NL-3981 SB Bunnik(NL)

(72) Inventor: Mackor, Adrianus
Dennenlaan 51
NL-3739 KM Hollandsche Rading(NL)

(72) Inventor: de Kreuk, Casper Willem
Kon. Julianalaan 55
NL-3956 XK Leersum(NL)

(74) Representative: van der Beek, George Frans et al,
Nederlandsch Octrooibureau Johan de Wittlaan 15 P.O.
Box 29720
NL-2502 LS Den Haag(NL)

(54) An electrochemical sensor, a process for measuring hydrogen activity in a metal sample or other electrical conductor, a process for testing welded and other metal (steel) constructions as well as a process for testing a metal which forms a coating on a metal or other substrate.

(57) The invention relates to an electrochemical sensor comprising a container wherein a metal (hydride) standard is mounted into electrical contact with an electrolyte, which is arranged so, that there can be in electrical contact between the object to be sensored and the electrolyte. This context can be via the palladium or palladiumsilver layer. The sensor is based on a concentration cell $MH_x/HUP/MH_y$. The potential of such a cell can be measured and gives an indication of hydrogen activity. The sensor can be used for testing welded and other metal (steel) constructions as well for testing a metal which forms a coating on a metal or other substrate.

EP 0 097 390 A1

./...

fig-1a          fig-1b

- An electrochemical sensor, a process for measuring hydrogen activity in a metal sample or other electrical conductor, a process for testing welded and other metal (steel) constructions as well as a process for testing a metal which forms a coating on a metal or other substrate -

The process relates to an electrochemical sensor, to a process for measuring hydrogen activity in a metal sample or other electrical conductor, to a process for investigating welded and other metal (steel) constructions as well as to a process for testing a metal, which forms a coating on a metal or other substrate.

Methods are known for the determination of the hydrogen activity, which are based on sample dilution, changes in mass (gravimetric method), changes in hydrogen pressure in a closed volume, changes in electrical resistance of the sample and of the heat, which is evolved during the absorption process (calorimetric method).

The disadvantages, connected with these known methods are obvious, these methods are destructive, complicated, time-consuming and they can only be carried out by skilled persons.

U.S. patent 4,065,373 discloses a hydrogen patch cell for measuring hydrogen atoms formed during corrosion of ferrous metals. This cell is designed to be mounted on a ferrous wall, through which hydrogen atoms penetrate and it is mounted on the side, to which the hydrogen atoms diffuse. The cell consists of a cavity enclosed by an insulating impervious material. An electrolyte in the cavity provides an environment suited for the conversion of hydrogen atoms to ions. One side of the body of the cell is provided with a fluid-tight seal to the ferrous wall. An inert barrier layer within the body, adjacent to the end portion interposes between the cavity and the ferrous wall, adjacent to the wall. The barrier is permeable to hydrogen atoms, but impermeable with respect to the electrolyte. The void between the barrier and the ferrous wall is filled by means of a coupling material. This material is also inert, but is has to be permeable to hydrogen atoms. Electrodes on the body connect it to an external circuit for the electrochemical conversion of hydrogen atoms and ions which enter the electrolyte. One electrode in the electrolyte is a planar metal electrode coextensive with the barrier. This cell is used for permanent mounting on for instance pipelines and it can give an impression of the condition of these lines.

Such a cell is unsuited for rapid measurement of hydrogen activity in a metal sample or other electrical conductor or for investigating welded constructions.

A similar device (a so-called "barnacle" cell) is disclosed in U.S. patent 4,221,651.

Now, an electrochemical sensor has been found, which is characterized by a container in which a metal (hydride) standard is mounted in electrical contact with an electrolyte and in which in the case of a liquid electrolyte also a (glass) membrane is provided for enclosure, on which a palladium or palladium-silver layer is or can be applied to serve as a contact surface and also as an electrode in the measuring cell, while in case of a solid electrolyte part of it comes to the surface of the container and on which at least on this part a palladium or palladium-silver layer is or can be applied to serve as a contact surface and also as an electrode in the measuring cell and in which the metal (hydride) standard is provided with an insulated palladium or palladium-silver connecting wire, respectively, and the electrolyte can be brought into contact via the palladium or palladium-silver layer, respectively, with a part of a metal or other electrically conducting surface to be tested, said contact being via the palladium or palladium-silver layer, when present.

The sensor according to the invention allows the measurement of hydrogen activity in a non-destructive and relatively simple manner. The measurement can be carried out by holding the sensor with the sensitive part on a surface to be tested, after which, with the aid of measuring apparatus, which is connected to the sensor by means of the connecting wire, a potential can be determined, which is a measure of hydrogen activity.

The sensor can be provided with a palladium or palladium-silver layer which is permanently placed, or with a demountably placed palladium or palladium-silver layer or without palladium or palladium-silver layer. A fixed-mounted palladium or palladium-silver layer can be deposited for instance by vapour deposition or sputtering. A suitable layer thickness is 1 micron. As far as an enclosing layer can be obtained, a smaller thickness is obviously advantageous in connection with the more rapid passage of the hydrogen and therefore a more rapid measurement, while at the same time the thinner layer may result in a more reliable measurement.

A demountable layer, which can be constructed as a kind of a sheet, can be loosely inserted or preferably can be clamped to the sensor by means of an attachment, thus allowing measurement without such a metallic in-between layer, if desired. If a demountable layer is applied, it has to possess sufficient mechanical strength, either by using a thicker layer or by co-use with other materials, resulting in the required strength.

The advantage of an intermediate layer of palladium or palladium-silver is that it becomes possible to work with a symmetrical cell. Furthermore, by application of the intermediate layer, less disturbances occur by phenomena at the surface of the ferrous metal to be investigated, like for instance as caused by corrosion phenomena, oxide skins, or contamination of the surface to be investigated.

Under conditions it may be a disadvantage that hydrogen passes through palladium rather slowly (for the penetration of a layer of 100 micron often some hours are required). Through a palladium-silver layer the transport takes place more rapidly. A suitable composition of a palladium-silver alloy is for instance 85 mole % palladium and 15 mole % silver.

An advantage of a demountable intermediate layer is that this can be regenerated separately.

A difference with the disclosure of U.S. patent 4,065,373 is that according to the invention a difference in potential is measured, while according to the said U.S. patent a current is measured.

In the sensor according to the invention, instead of a glass membrane, also for instance a membrane of Vycor glass, Nafion or another proton-conducting polymer can be applied. On this, palladium or palladium-silver can be sputtered.

The sensor used is transportable and it can also be applied under the surface of water with the aid of appropriate apparatus.

The method, according to the invention, is based on the concentration cell: Metal hydride (standard) $MH_x$-Electrolyte, which

4

contains mobile hydrogen ions-Metal hydride $MH_y$ (sample), in which the sample generally is mounted in a fixed position and the metal hydride (standard), together with the electrolyte, forms the transportable sensor, on the understanding that in case a Pd or Pd/Ag layer is applied, this layer forms also part of the sensor.

Such a non-destructive process for the determination of the hydrogen activity (or concentration) in metals or other electrical conductors, hydrogen-containing materials in the form of wires, sheets, tubes etc. is not yet known in the literature.

With the sensor according to the invention the contact surface with the sensor is appropriately about 1 $mm^2$. Because in essence a potential is measured against a reference, the exact surface area is not important.

The sensor according to the invention can measure continuously or discontinuously. By placing the sensor according to the invention against the sample or the material to be tested, the concentration cell is established, in which the open-circuit voltage is given by the Nernst equation:

$$E = \frac{kT}{q} \ln \frac{\alpha (H, \text{ sample}}{\alpha (H, \text{ standard})}$$

in which $\alpha (H)$ denotes the thermodynamic activity of H and k is the Boltzmann constant, T denotes the absolute temperature and q is the charge of an electron. The measured open-circuit voltage gives the mean value of the activity of the absorbed hydrogen in the measuring area of 1 $mm^2$, or so much larger or smaller as the measuring conditions allow or make desirable. To determine the concentration of absorbed hydrogen in the measuring area, it is necessary to know the relation between activity and concentration for the concerning metal hydride. This can take place with the aid of a sample with uniform hydrogen-absorption, in which the activity is determined with the cell described here and from this the concentration via one of the known methods. In this invention further activities of hydrogen are measured at the surface of metals and intermetallic compounds (alloys, including bronzes) and thereby local differences in activity are established and these are subsequently correlated with intentional or non-intentional inhomogeneity of the metal surfaces and with the mechanical properties of the concerning metals and construction, in which these metals are used. This use of a concentration cell with a variable sample $MH_x$ for the detection of activities of hydrogen in metal surfaces is an aspect of this invention. Another aspect is the correlation of mechanical properties of metals (e.g. ductility of a welded construction, on a metallic coating, placed on a metal) with the activity (differences) found.

The said correlations allow various conclusions to be drawn on the tested materials. The present invention thus provides an excellent method for continuously and discontinuously following the condition of pipelines and other means used in sour and other corrosive environments, such as occur in the natural gas and oil wells, transport systems and refineries.

Furthermore it is possible to carry out the investigation under water, apparently provided that a protection is placed around the sensor. Such a possibility for investigation is of great importance, since also under water often welds and the like must be inspected, X ray exposures being impossible there.

In the sensor either an aqueous electrolyte or a solid proton-conductor can be used. The sensor according to the invention has been used both with an aqueous electrolyte HCl/KCl of pH 2.2 and with a solid rapid ion-conducting electrolyte, more specific ally with hydrogen uranyl phosphate tetrahydrate $HUO_2PO_4.4H_2O$ (HUP), which shows a negligible electronic conductivity. In the latter case a concentration cell $MH_x/HUP/MH_y$ is formed.

Among other references, HUP is known from D.W. Murphy, J. Broadhead, B.C.H. Steele (Eds.), Materials for Advanced Batteries, Plenum Press, New York-London, 1980.

In the above indication, M denotes a hydride-forming metal like e.g. palladium. However, in the process according to the invention also further hydride-forming metals or metal alloys including bronzes can be applied, like e.g. titanium, zirconium, sodium and iron (steel) and further materials, as described by R.L. Cohen and J.H. Wernick in Science 214, 1081-1087 (1981). The use of HUP in a photo-electro-chemical cell has been described in Dutch patent application 82,00897.

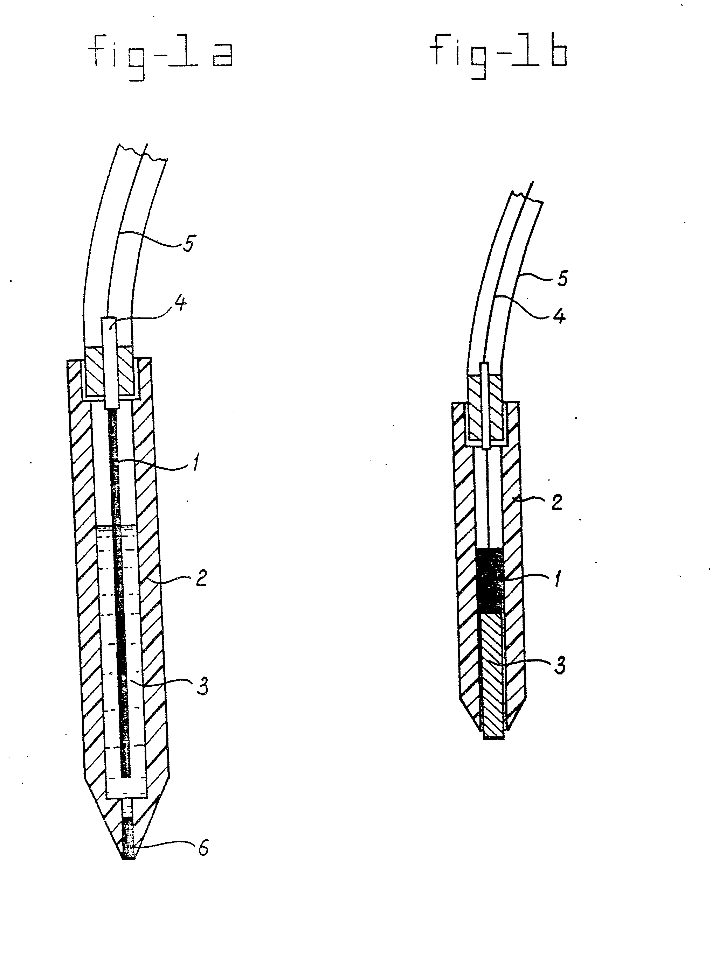

The design of the sensor with the aqueous electrolyte is shown in Fig. 1a and the sensor with the solid electrolyte in Fig. 1b. Both sensors are contained in a glass or plastic holder or in another nonconducting holder. The contact between sensor and sample arises via a Vycor glass membrane or another membrane with semi-permeable properties.

The sensor can be used in a simple way for measuring the hydrogen activity in welded constructions (for instance of steel) and in coating of metal on metal. The hydrogen activity then is a measure of the ductility of the welded constructions or of the coatings. In particular the sensor may be used directly or with a rubber or plastic mantle for testing welded constructions or coatings under water. The sensor with aqueous electrolyte is kept in a HCl/KCl aqueous electrolyte, which is saturated with hydrogen gas (at atmospheric pressure). However, for the good action this storage method is not essential.

The solid electrolyte is kept at room temperature in air, which is considered, however, as an advantage. However, this sensor without an intermediate Pd or Pd/Ag layer must be pressed powerfully against the sample to insure a good electrical contact.

As an $MH_x$ standard in both cases $PdH_x$ was used. This was prepared by contacting a palladium wire with 1 atmosphere of hydrogen for several days.

For other examples than those described in the Examples, one might consider a palladium or palladium-silver standard with a lower hydrogen loading, which is obtained by shortening the residence time of the wire in the hydrogen atmosphere, or by lowering the partial pressure of the hydrogen gas, for example by dilution with nitrogen gas. Also another hydride-forming metal may be used as a standard and it can be loaded with an arbitrary amount of hydrogen by exposure to a hydrogen partial pressure of 0-1 atmosphere. The open-circuit voltages are measured with a high-ohmic millivoltmeter.

The contact time is chosen dependent on the sampled material and the applied sensor. The expert can determine the desired contact time for each combination in a simple way. A contact time of 2 to 5 minutes will amply suffice in nearly all cases of point-to-point measurement. Appropriately, often contact times are applied in these cases of 20 seconds.

It is further possible with the process according to the invention to let the sensor sense a certain route on the metal surface. In that case, in general, a relatively more rapid measurement will be possible, because the time necessary for establishing while sensing the metal surface will be shorter, since the measured potential varies in a smaller range than will be the case during the initial application of the sensor to the metal surface.

A sensor according to the invention is illustrated in Fig. 1a and 1b.

Figure description

Fig. 1a depicts a sensor, according to the invention, with an aqueous electrolyte. Wire 1 is the metal standard, in this case $PdH_x$, which is placed in holder 2 (in this embodiment of perspex), in which the palladium wire is placed in the electrolyte HCl/KCl (pH = 2.2), which is depicted by 3.
The standard metal 1 is connected with connecting wire 5 via a conductor 4. The assembly of 4 and 5 is insulated. For the enclosure of the aqueous electrolyte in addition a membrane 6 is applied, which in this case is made of Vycor glass, to which a non-depicted layer of palladium or palladium-silver may be applied.

Fig. 1b gives the make-up with an ion-conducting solid. Here membrane 6 is omitted. The further reference numbers have the same meaning as in Fig. 1a.

Example I

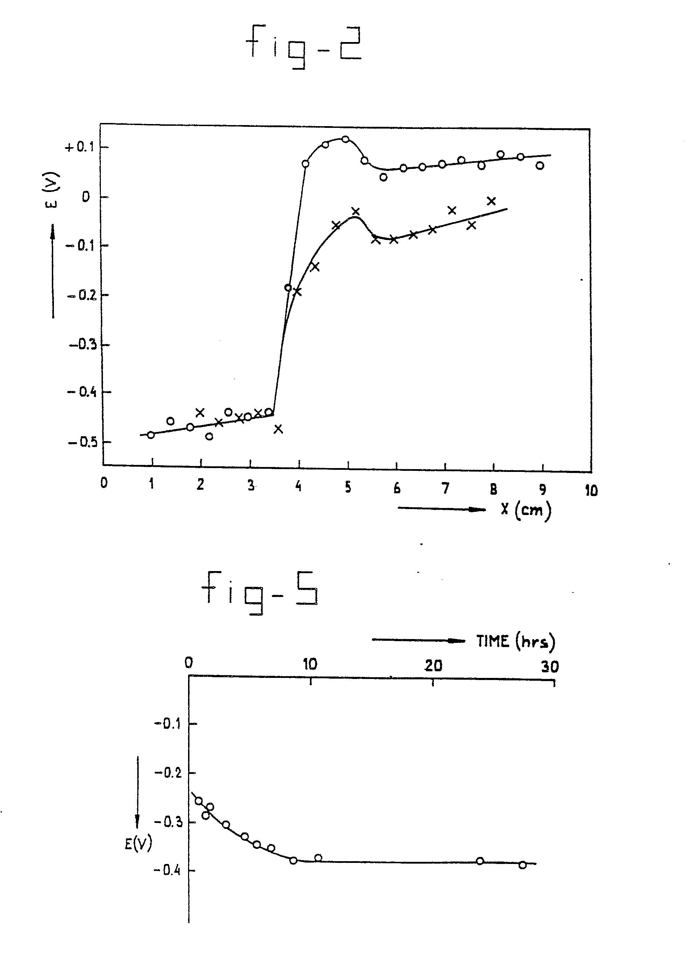

An electrochemical sensor according to the invention was constructed by combining a palladium wire, which had been in contact with 1 atmosphere of hydrogen gas at room temperature, with the aqueous electrolyte HCl/KCl pH 2.2. The sample to be tested was a palladium wire of 10 cm length and 0.5 mm diameter, which had been into contact with 1 atmosphere of hydrogen gas, for half of its length during 24 hours at room temperature. The measurement was started some minutes after removal of the Pd sample from the hydrogen atmosphere and the results are shown in Fig. 2. The sensor with the aqueous electrolyte (000) indicates the limit in hydrogen activity of the Pd sample wire very accurately. The obtained profiles remained stable for some days.

Example II

An electrochemical sensor as in example I was modified by enclosing the aqueous electrolyte by a palladium foil (thickness 100 $\mu$m). The investigated sample was a palladium foil, after exposure to hydrogen gas at 1 atmosphere, which was held against the palladium foil of the sensor, using glycerine as a contact medium. The potential difference between the latter foil and the reference wire has been recorded as a function of time as shown in Fig. 3.

Example III

Example I was repeated subject to the condition that a sensor was applied which contained HUP as an electrolyte. The sensor with the solid electrolyte (XXX in Fig. 2) indicates the limit in hydrogen activity of the Pd sample wire very accurately. The obtained profiles remained stable for some days.

Example IV

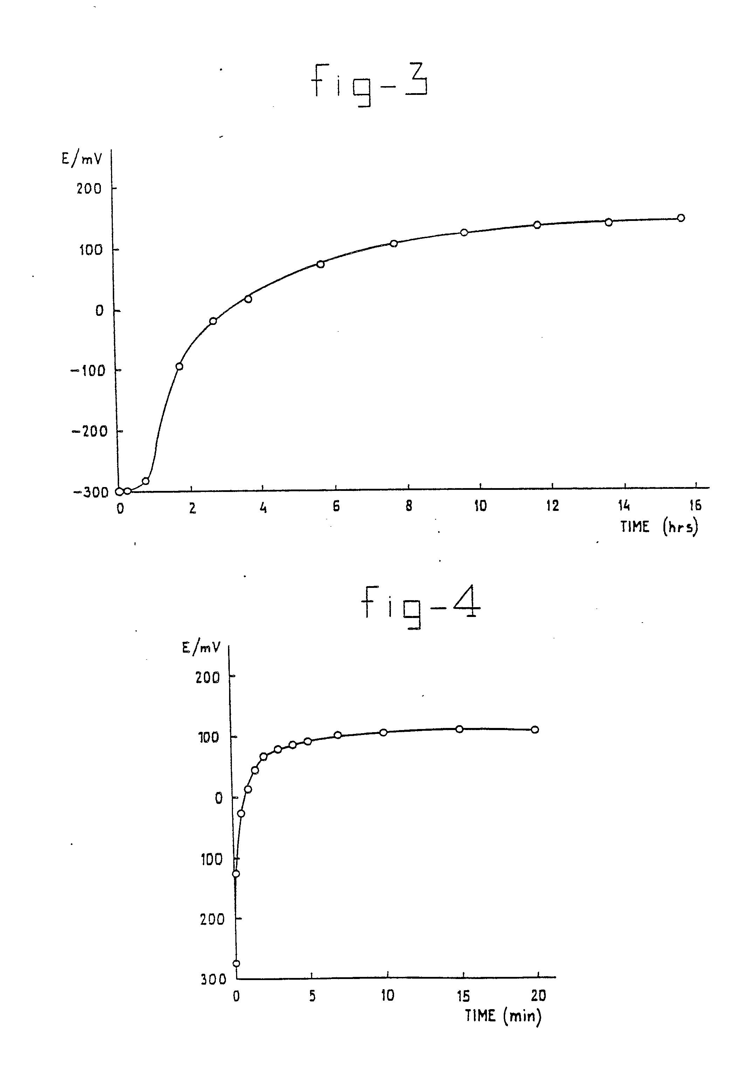

The solid electrolyte sensor was provided with a palladium layer (appr. 20 nm thickness) on the HUP electrolyte by sputtering. This sensor was held against a palladium foil and the difference in potential between the two electrodes of the sensor was recorded, as in Example II. The results are given in Fig. 4.

Example V

The solid electrolyte sensor was tested as in Example III on a crystalline sample of $Ni_{64} Zr_{36}$, which had been kept for 24 hours under $H_2$ at 1 atmosphere. The diffusion of the absorbed hydrogen from the sample was measured as a function of time and it is reproduced in Fig. 5. After 10 hours a constant hydrogen activity was measured.

Example VI

An electrochemical sensor was constructed as described in Example I, using a pressed tablet of Zr powder (1 cm diameter, 0.1 cm thickness), which was photoelectrochemically charged, according to the process of Dutch patent application 82,00897, with 0.16 ml of $H_2$ (calculated from the passed charge).

The Zr tablet gave, before the loading with $H_2$ in combination with $PdH_x$-HCl/KCl electrolyte as a sensor, an open-circuit voltage of -0.355 V. After charging a potential of -0.210 V was measured. The potential change therefore amounts to +0.145 V.

Example VII

An electrochemical sensor was constructed as described in Example VI, using a half-circular disk (A) of amorphous $Ni_{46.7}Zr_{46.8}Fe_{3.3}Ti_{3.2}$ (thickness 15-60 $\mu$m, diameter 0,7 cm) and a half-circular disk (B) of amorphous $Ni_{63.7}Zr_{36.3}$ with the same dimensions, which were simultaneously and together loaded with 0.22 ml of $H_2$ (placed against each other) in the way as described in Dutch patent application 82,00897.

The half disks gave an open-circuit voltage of +0.140 V (A) and +0.120 V (B), respectively, before loading. After loading, voltages were measured of +0.240 V (A) and 0.310 V (B), respectively. The differences amounted therefore to 0.100 V (A) and 0.190 V (B).

Example VIII

An electrohemical sensor was constructed as described in Example I, using a stainless steel sheet sample, covered with 5 $\mu$m of electrolytically deposited hard chromium.

The potential was measured with the sensor, directly after application of the chromium layer and after a heat treatment at 300 °C during an increasing time lapse. The results of this measurement are reproduced in Table A and they demonstrate that the hydrogen activity decreases continuously in the first hour of the heat treatment. These results are in agreement with those obtained by a destructive way, in which after 1 hour the hydrogen content of the material had decreased to the technically fully acceptable level of less than 1 ppm.

Table A

Hydrogen activity measurements in a covering layer of chromium on steel, before and after a heat treatment at 300 °C.

| Time duration of heat treatment (min.) | Potential with respect to sensor (in mV) |
|---|---|
| 0 | -400 |
| 1 | +150 |
| 5 | +300 |
| 60 (and after 3 days at room temperature) | +820   (+680) |

Example IX

The sensor as in Example IV was used on a steel sheet sample which was electrolytically covered with 5 /um of cadmium. The difference in potential between the two electrodes of the sensor was recorded before establishing the contact with the cadmium layer and after equilibrium had been reached during contact. The latter potential is 490 mV more positive than the former. After a heat treatment at 300°C (45 minutes) of the cadmium layer this difference in potential was reduced to 204 mV.

Example X

The method of Example I was followed, using a sample of low-alloyed carbon steel, in which a weld had been made in the steel, whereby at the site of the weld a voltage difference of 60 mV was measured with respect to the steel next to the weld. That difference is much larger than that, which can be ascribed to local changes in material composition at the site of the layer, other than hydrogen activity.

Example XI

The sensor as in Example IV was used on a steel-37 sheet (1.7 g; thickness 1 mm) which was galvanostatically loaded with hydrogen to give a calculated hydrogen content of 20 ppm. A potential was measured before contacting and after equilibrium with the sample had been established, as in Example IX. A difference in potential of +657 mV was obtained. An untreated steel-37 sample (same dimensions) similarly showed a +560 mV difference in potential.

Example XII

The sensor as in Example II was used in the way described in Example XI with the following modifications. The steel sheets were now either galvanostatically loaded with 30 ppm of hydrogen (calculated) or freed from hydrogen by a heat treatment at 300 °C during 12 hours. The measured differences in potential were +511 and +312 mV.

C L A I M S

1. Electrochemical sensor, <u>characterized</u> by a container, wherein a metal (hydride) standard is mounted into electrical contact with an electrolyte, wherein in the case of a liquid electrolyte also a (glass) membrane is provided for enclosure, on which a palladium or palladium-silver layer is or can be applied to serve as a contact surface and also as an electrode in the measuring cell, while in case of a solid electrolyte part of it comes to the surface of the container and on which at least on this part a palladium or palladium-silver layer is or can be applied, to serve as a contact surface and also as an electrode in the measuring cell and in which the metal (hydride) standard is provided with an insulated palladium or palladium-silver connecting wire, respectively, and the electrolyte or palladium layer can be brought into contact with a part of a metal or other electrically conducting surface to be tested, said contact being via the palladium or palladium-silver layer, when present.

2. An electrochemical sensor, according to claim 1, <u>characterized</u> in that a palladium or palladium-silver layer is applied onto the contact surface of the electrolyte or the (glass) membrane, serving as enclosure of the liquid electrolyte.

3. A sensor, according to claim 1, <u>characterized</u> by a vapour-deposited or sputtered palladium or palladium-silver layer.

4. A sensor according to one or more of the claims 1-3, <u>characterized</u> in that the layer is a palladium layer.

5. A sensor according to claim 3, <u>characterized</u> in that the layer is a palladium-silver layer.

6. A sensor, according to one or more of the claims 1-5, <u>characterized</u> in that the electrolyte has an aqueous acidic composition.

7. A sensor, according to one or more of the claims 1-5, <u>characterized</u> in that the electrolyte has a non-aqueous composition.

8. A sensor, according to one or more of the claims 1-5, <u>characterized</u> in that the electrolyte is a rapid ion-conducting solid.

9. A sensor, according to claim 8, <u>characterized</u> in that the electrolyte is hydrogen uranyl phosphate tetrahydrate (HUP).

10. A sensor, according to one or more of the claims 1-9, <u>characterized</u> in that the standard is palladium (hydride).

11. A process for the measurement of hydrogen activities in a metal or other electrically conducting sample wherein a sensor, according to one or more of the claims 1-10 is used.

12. A process for measuring hydrogen activity, according to claim 11, <u>characterized</u> in that the measured sample consists of zirconium, titanium or sodium or an intermetallic alloy.

13. A process for measuring hydrogen activity, according to claim 11, <u>characterized</u> in that the sample consists of steel.

14. A process for testing a weld-construction, wherein the hydrogen activity is determined with the aid of a sensor according to one or more of the claims 1-10 and/or the process according to one or more of the claims 11-13.

15. A process, according to claim 14, <u>characterized</u> by testing a weld-construction under (sea) water.

16. A process for testing a metal forming a coating on a metal or another substrate, <u>characterized</u> by using a sensor according to one or more of the claims 1-10 and/or a process according to one or more of the claims 11-13.

17. Means for measuring the hydrogen activity in a metal or other electrically conducting sample or for testing  welded and other metal (steel) constructions or for testing a metal forming a coating on a metal or other substrate, <u>characterized</u> by a sensor, according to one or more of the claims 1-10.

fig-1a

fig-1b

fig-2

fig-5

Fig-3

Fig-4

European Patent
Office

**EUROPEAN SEARCH REPORT**

**0097390**
Application number

EP  83 20 0809

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | | | G 01 N   27/30 |
| Y | DE-A-2 802 518  (NATIONAL RESEARCH DEVELOPMENT) <br> * Claims 1-4 * | 1 | |
| A | | 7,8,11 ,14 | |
| | --- | | |
| Y | GB-A-2 078 962  (A. CHAN CHUNG) <br> * Page 1 * | 1 | |
| A | | 6,10 | |
| | --- | | |
| Y | US-A-4 179 491  (A.T. HOWE) <br> * Column 3, lines 22-49 * | 1,9 | |
| | --- | | **TECHNICAL FIELDS SEARCHED (Int. Cl. ³)** |
| Y | GB-A-2 048 943  (NATIONAL RESEARCH DEVELOPMENT) <br> * Page 1 * | 1,9 | G 01 N   27/30 <br> G 01 N   27/56 |
| A | US-A-4 278 519  (V.Y. WON) <br> * Page 1 * | 1 | |
| | --- | | |
| A | US-A-4 006 063  (M. ENSANIAN) <br> * Page 1 * | 1 | |
| | --- | | |
| A | US-A-4 190 501  (O.L. RIGGS) <br> * Page 1 * | 1 | |
| | ---                    -/- | | |

The present search report has been drawn up for all claims

| Place of search <br> THE HAGUE | Date of completion of the search <br> 16-09-1983 | Examiner <br> DUCHATELLIER M.A. |
|---|---|---|

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,A | US-A-4 221 651 (F.B. MANSFELD)<br>* Page 1 * | 1 | |

-----

TECHNICAL FIELDS
SEARCHED (Int. Cl. ³)

The present search report has been drawn up for all claims

| Place of search<br>THE HAGUE | Date of completion of the search<br>16-09-1983 | Examiner<br>DUCHATELLIER M.A. |
|---|---|---|

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503. 03.82